# EUROPÄISCHE PATENTANMELDUNG

(11) **EP 4 838 126 A1**
(43) Veröffentlichungstag der Anmeldung: **11.11.2026**
(21) Anmeldenummer: 25222919.0
(22) Anmeldetag: 12.12.2025
(51) Int. Cl.: F16L 59/14, F16L 9/18, F16L 9/19

(54) **SCHUTZROHR UND ANORDNUNG MIT EINEM SCHUTZROHR**

(30) Priorität: 07.05.2025 DE 202025102528 U
(71) Anmelder: Schornsteintechnik Neumarkt GmbH, 92318 Neumarkt (DE)
(72) Erfinder: Kosmehl, Thomas, 92318 Neumarkt (DE); Kosmehl, Tobias, 92318 Neumarkt (DE)
(74) Vertreter: Dr. Gassner & Partner mbB

(57) **Zusammenfassung**

Schutzrohr (1, 10), insbesondere zum Anschluss an eine Wärmepumpe, umfassend ein Außenrohr (2), wenigstens ein in dem Außenrohr (2) angeordnetes, von einer Flüssigkeit durchströmbares Innenrohr (3), sowie eine einen Freiraum zwischen dem Innenrohr (3) und dem Außenrohr (2) ausfüllende Dämmung (6), wobei zwischen der Dämmung (6) und dem Außenrohr (2) wenigstens eine Ausnehmung (7, 8) ausgebildet ist, in der ein Elektroinstallationsrohr (9) anordenbar oder angeordnet ist. Daneben wird eine Anordnung mit einem derartigen Schutzrohr (1, 10) vorgeschlagen.

## Beschreibung

Die Erfindung betrifft ein Schutzrohr, insbesondere zum Anschluss an eine Wärmepumpe, umfassend ein Außenrohr, wenigstens ein in dem Außenrohr angeordnetes, von einer Flüssigkeit durchströmbares Innenrohr, sowie eine einen Freiraum zwischen dem Innenrohr und dem Außenrohr ausfüllende Dämmung.

Derartige Schutzrohre eignen sich insbesondere zum Anschluss an Wärmepumpen.

### Stand der Technik

Wasser-Wärmepumpen, die an das Heizsystem eines Gebäudes angeschlossen sind, weisen üblicherweise eine Vorlaufleitung und eine Rücklaufleitung auf, durch die eine Flüssigkeit wie Wasser oder eine Mischung aus Wasser und einem Frostschutzmittel in einem Kreislauf gepumpt wird. Mittels der Wärmepumpe kann ein Gebäude temperiert, insbesondere beheizt werden. Um unnötige Wärmeverluste zu vermeiden und eine effiziente Wärmeübertragung und Energieeinsparung zu gewährleisten, ist das Innenrohr thermisch isoliert in dem Außenrohr aufgenommen. Das Außenrohr schützt das Innenrohr auch vor Witterungseinflüssen, Verschmutzung und Beschädigung.

Es ist üblich, wasserführende Rohre und Leitungen nach der Installation mit Dämmmaterial zu umgeben. Dafür können beispielsweise geschlitzte Rohre aus einem geschäumten Material verwendet werden. Das manuelle Ummanteln einzelner Rohre ist allerdings aufwändig.

Bei der Installation von Wärmepumpen werden zusätzlich elektrische Leitungen benötigt, sowohl für die Bereitstellung von elektrischer Leistung als auch für Sensor- oder Steuerleitungen. Die separate und manuelle Installation von elektrischen Steuer- und Fühlerleitungen ist komplex und zeitaufwändig.

Der Erfindung liegt daher die Aufgabe zugrunde, ein Schutzrohr anzugeben, das insbesondere für den Anschluss an eine Wärmepumpe geeignet ist, das eine vereinfachte und effiziente Installation ermöglicht.

Diese Aufgabe wird durch ein Schutzrohr mit den Merkmalen des Schutzanspruchs 1 gelöst.

Bei dem erfindungsgemäßen Schutzrohr ist zwischen der Dämmung und dem Außenrohr wenigstens eine Ausnehmung ausgebildet, in der ein Elektroinstallationsrohr anordenbar oder angeordnet ist.

Durch diese Ausnehmung wird auf einfache Weise eine Befestigungs- oder Montagemöglichkeit geschaffen, um ein Elektroinstallationsrohr an dem Schutzrohr anzubringen.

Die Erfindung kombiniert somit ein Schutzrohr mit einem Elektroinstallationsrohr, in das eine elektrische Leitung eingezogen werden kann. Dementsprechend entfällt eine separate Montage der elektrischen Leitung. Da das Außenrohr das Elektroinstallationsrohr umgibt, wird die elektrische Leitung durch das Elektroinstallationsrohr vor Umgebungseinflüssen geschützt.

Das Außenrohr des Schutzrohrs wird unter Berücksichtigung seiner Materialauswahl und seines Designs so gewählt, dass es den mechanischen Anforderungen und den Umweltkonditionen, besonders im Außenbereich, gewachsen ist. Das Innenrohr ist so ausgebildet, dass es den Flüssigkeitsdurchfluss effizient ermöglicht, während die Dämmung dafür sorgt, dass allenfalls eine geringe Wärmeübertragung stattfindet. Die Dämmung kann unterschiedlich ausgebildet sein, beispielsweise können geschäumte Kunststoffe, Glasfaser oder andere passende Isoliermaterialien, verwendet werden.

Eine Ausnehmung ist vorzugsweise kreisförmig oder kreissegmentförmig geformt. Grundsätzlich sind natürlich auch anders geformte Ausnehmungen möglich, beispielsweise rechteckige oder sechseckige Ausnehmungen. In einer derartigen Ausnehmung kann insbesondere ein Elektroinstallationsrohr aufgenommen werden. Dadurch erübrigt sich die separate Verlegung und Befestigung elektrischer Leitungen.

Das Schutzrohr kann Ausnehmungen umfassen, die hinterschnitten ausgebildet sind. Dadurch ergibt sich der Vorteil, dass ein Elektroinstallationsrohr formschlüssig in der Ausnehmung aufgenommen werden kann. Das Elektroinstallationsrohr wird dann besonders sicher in der Ausnehmung gehalten. Auch eine nachträgliche Anbringung eines Elektroinstallationsrohrs oder ein Austausch ist möglich.

Vorzugsweise sind bei dem erfindungsgemäßen Schutzrohr mindestens zwei Ausnehmungen zwischen der Dämmung und dem Außenrohr vorhanden, die in Umfangsrichtung des Schutzrohrs äquidistant und somit einander gegenüberliegend angeordnet sind. Diese gleichmäßige Anordnung ist vorteilhaft hinsichtlich der Festigkeit und Stabilität des Schutzrohrs.

Das erfindungsgemäße Schutzrohr kann so gestaltet sein, dass das Außenrohr aus einem rostfreien Material besteht, beispielsweise aus Edelstahl. Diese Materialwahl ist vorteilhaft hinsichtlich der Langlebigkeit und Widerstandsfähigkeit des Schutzrohrs, besonders wenn es in einer korrosiven Umgebung verwendet wird. Edelstahl ist für seine hohe Resistenz gegenüber Rost und Korrosion bekannt, was zu einer verlängerten Lebensdauer des Rohres beiträgt. Es stellt daher sowohl aus praktischer als auch aus gestalterischer Sicht eine passende Wahl für die Konstruktion von Schutzrohren dar, die mit Wärmepumpen oder ähnlichen Systemen kompatibel sind.

Optional kann das Schutzrohr innerhalb des Außenrohrs zumindest ein erstes und ein zweites Innenrohr umfassen, wobei das erste Innenrohr als Vorlaufleitung und das zweite Innenrohr als Rücklaufleitung gestaltet ist. Diese Anordnung bietet eine gut realisierbare Lösung zur Umsetzung eines Kreislaufsystems für Flüssigkeiten, die zwischen einer Quelle, wie einer Wärmepumpe, und einem Ziel, wie einem Heizsystem, transportierbar sind. Das als Vorlaufleitung ausgebildete erste Innenrohr dient dazu, die erhitzte Flüssigkeit effizient und verlustarm von der Quelle zum Ziel zu bewegen. Entsprechend dient das als Rücklaufleitung ausgebildete zweite Innenrohr dazu, die abgekühlte Flüssigkeit wieder zurückzuleiten, um den Kreislauf zu schließen und die Flüssigkeit erneut zu erhitzen.

Diese duale Leitungsanordnung innerhalb des Schutzrohrs bewirkt nicht nur einen kontinuierlichen und gut funktionierenden Wärmetransport, sondern trägt auch zur Verbesserung der Wärmeeffizienz bei, indem Verluste reduzierbar sind und ein konstantes Temperaturniveau gehalten werden kann. Die platzsparende Konstruktion innerhalb eines Schutzrohrs bietet darüber hinaus eine unkomplizierte Installation und eine Verminderung des Risikos von Leckagen durch den Einsatz von robusteren und einheitlichen Leitungen.

Die im Schutzrohr zwischen dem Innenrohr und dem Außenrohr vorhandene Dämmung bewirkt, dass die Temperatur der transportierten Flüssigkeit weitestgehend konstant gehalten wird, was besonders hilfreich ist, um Energieverluste zu minimieren.

Das Schutzrohr ist vorzugsweise so gestaltet, dass das Innenrohr als Hochtemperaturrohr ausgebildet ist. Diese Ausführung erweist sich als vorteilhaft für Anwendungen, die hohe thermische Belastungen anstreben, wie sie beispielsweise bei Wärmepumpen oder Heizsystemen vorkommen können. Ein Hochtemperaturrohr ist dafür ausgelegt, höhere Betriebstemperaturen der durchfließenden Flüssigkeiten zu ertragen, beispielsweise 95 °C, ohne dass seine Funktionsfähigkeit beeinträchtigt wird.

Daneben betrifft die Erfindung eine Anordnung, die ein Schutzrohr der beschriebenen Art und wenigstens ein Elektroinstallationsrohr umfasst, das in der Ausnehmung zwischen der Dämmung und dem Außenrohr angeordnet ist. Diese Kombination bietet eine praktische Lösung zur Integration von elektrischen Leitungen mit flüssigkeitsführenden Leitungen, wie sie in Anlagen zum Heizen und Kühlen verwendet werden.

Vorzugsweise kann die Größe und die Form der Ausnehmung und die Größe und die Form des Elektroinstallationsrohrs so gewählt werden, dass das Elektroinstallationsrohr in der Ausnehmung klemmend gehalten ist. In Abhängigkeit des Einsatzzwecks können unterschiedlich große Elektroinstallationsrohre verwendet werden. Auf eine separate Installation oder Befestigung des Elektroinstallationsrohrs kann somit verzichtet werden. Nach der Montage des Schutzrohrs kann eine elektrische Leitung in das Elektroinstallationsrohr eingezogen werden. Die Integration eines Elektroinstallationsrohrs in die Anordnung verringert die Komplexität der Installation und bietet eine flexible und erweiterbare Lösung.

Im Rahmen der Erfindung kann es vorgesehen sein, dass das Elektroinstallationsrohr ein Wellrohr oder ein starres Rohr ist.

Die gewellte Struktur eines Wellrohrs ermöglicht das einfache Biegen und Anpassen an enge oder kurvige Einbauverhältnisse. Das Wellrohr ist in der Lage, Bewegungs- oder Dehnungsspielräume auszugleichen, die durch thermische Ausdehnungen oder mechanische Einwirkungen erzeugt werden.

Ein starres Rohr hingegen bietet Robustheit und Beständigkeit gegenüber äußeren Einflüssen. Die feste Struktur ist ideal für Anwendungen, bei denen mechanische Festigkeit und Haltbarkeit im Vordergrund stehen. Das starre Rohr kann zudem besseren Schutz gegen physische Beschädigungen oder Deformationen bieten und hilft, die Kabel in einer linearen und übersichtlichen Weise zu führen.

Die Erfindung wird nachfolgend anhand von Ausführungsbeispielen unter Bezugnahme auf die Zeichnungen erläutert. Die Zeichnungen sind schematische Darstellungen und zeigen:
- Fig. 1: eine geschnittene Seitenansicht eines erfindungsgemäßen Schutzrohrs mit einem Elektroinstallationsrohr gemäß einem ersten Ausführungsbeispiel;
- Fig. 2: einen Schnitt entlang der Linie II-II von Fig. 1;
- Fig. 3: eine geschnittene Seitenansicht eines erfindungsgemäßen Schutzrohrs mit einem Elektroinstallationsrohr gemäß einem zweiten Ausführungsbeispiel; und
- Fig. 4: einen Schnitt entlang der Linie IV-IV von Fig. 3.

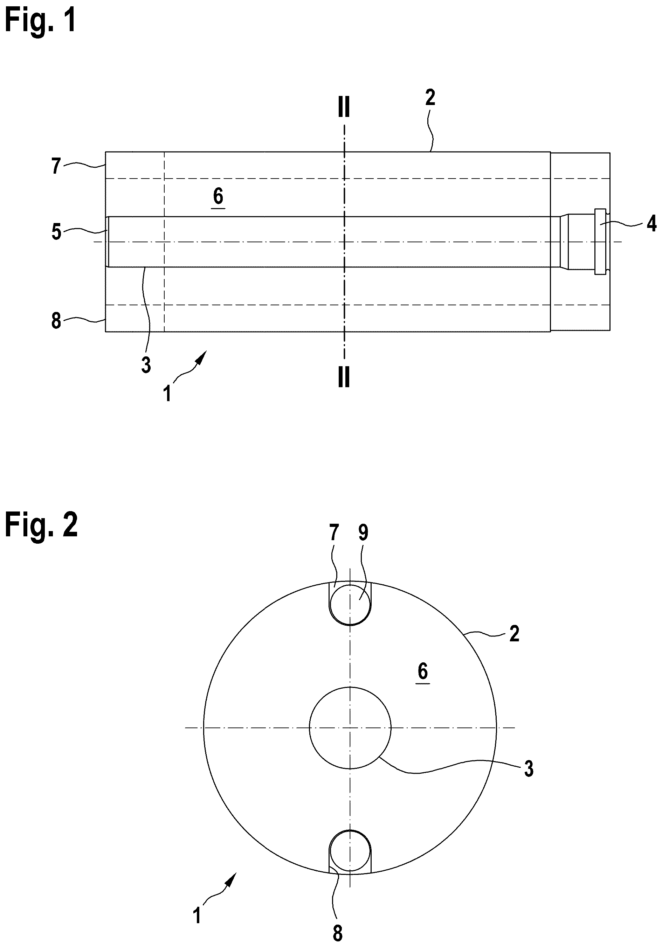

Fig. 1 ist eine geschnittene Seitenansicht eines Schutzrohrs 1, Fig. 2 zeigt einen Querschnitt des Schutzrohrs 1 entlang der Linie II-II. Das Schutzrohr 1 umfasst ein Außenrohr 2, in dem ein Innenrohr 3 konzentrisch angeordnet ist. In diesem Ausführungsbeispiel ist das Innenrohr 3 ein Hochtemperaturrohr (HT-Rohr), das für heiße Flüssigkeiten, insbesondere Wasser, geeignet ist. Das Außenrohr 2 ist aus rostfreiem Stahl (Edelstahl) hergestellt.

Das Innenrohr 3 besitzt an einem Ende eine Muffe 4 mit einem vergrößerten Durchmesser, in die ein gleich ausgebildetes Rohr mit seinem freien Ende 5 eingesteckt werden kann, um die beiden Rohre flüssigkeitsdicht miteinander zu verbinden.

Ein Freiraum zwischen dem Außenrohr 2 und dem Innenrohr 3 ist mit einer Dämmung 6 gefüllt. Die Dämmung 6 kann geschäumt oder extrudiert sein. Die Dämmung verhindert einen Wärmeaustausch zwischen dem Innenrohr 3 und dessen Umgebung. Eine erwärmte Flüssigkeit kann das Innenrohr 3 ohne große Wärmeverluste durchströmen.

Zwischen der Dämmung 6 und dem Außenrohr 2 sind zwei identische Ausnehmungen 7, 8 ausgebildet. In Fig. 2 erkennt man, dass die Ausnehmungen 7, 8 in der geschnittenen Ansicht U-förmig ausgebildet sind. An einen kreissegmentförmigen inneren Abschnitt schließen sich zwei parallele radial nach außen weisende Wände an. In jeder Ausnehmung 7, 8 ist ein Elektroinstallationsrohr 9 angeordnet. Der Durchmesser des Elektroinstallationsrohrs 9 ist so an die Größe der Ausnehmungen 7, 8 angepasst, dass das Elektroinstallationsrohr 9 in die Ausnehmung 7, 8 eingesetzt und klemmend gehalten ist. Es sind auch Ausführungen denkbar, bei denen die Ausnehmung hinterschnitten ist, wodurch ein besonders guter Halt des Elektroinstallationsrohrs gewährleistet wird. An seiner Außenseite ist das Elektroinstallationsrohr 9 von dem Außenrohr 2 umgeben.

In diesem Ausführungsbeispiel sind die beiden Ausnehmungen 7, 8 einander gegenüberliegend an entgegengesetzten Seiten des Schutzrohrs 1 angeordnet. Es sind auch andere Ausführungen eines Schutzrohrs denkbar, bei denen drei Ausnehmungen vorhanden sind, die in identischen Abständen entlang des Umfangs des Schutzrohrs angeordnet sein können.

Das Elektroinstallationsrohr 9 kann beispielsweise als Wellrohr oder als starres Rohr ausgebildet sein. In dem Elektroinstallationsrohr 9 kann sich eine Sensorleitung oder eine Steuerleitung befinden. Es ist auch möglich, Leitungen für eine Stromversorgung in dem Elektroinstallationsrohr 9 unterzubringen. In einem Elektroinstallationsrohr 9 können auch mehrere Leitungen oder eine Leitung mit mehreren Adern angeordnet sein. Die Leitungen können nach der Montage des Schutzrohrs in das Elektroinstallationsrohr 9 eingezogen werden.

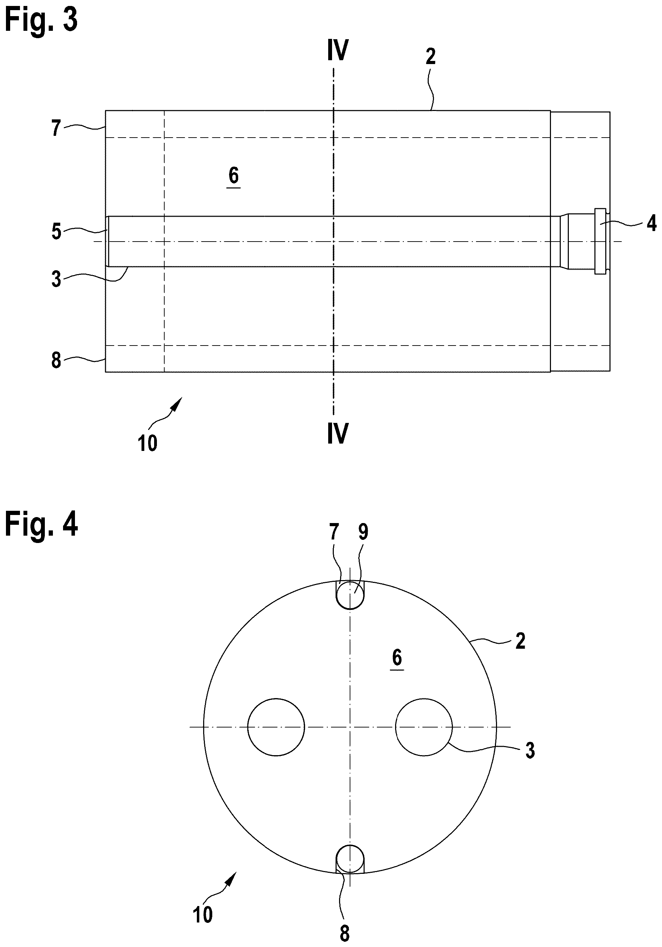

Die Fig. 3 und 4 zeigen ein zweites Ausführungsbeispiel eines Schutzrohrs 10, wobei Fig. 3 eine geschnittene Seitenansicht des Schutzrohrs 10 und Fig. 4 einen Querschnitt des Schutzrohrs 10 entlang der Linie IV-IV zeigt. Für diejenigen Komponenten, die mit denjenigen des ersten Ausführungsbeispiels übereinstimmen, werden dieselben Bezugszeichen wie in dem ersten Ausführungsbeispiel verwendet.

Das Schutzrohr 10 umfasst das Außenrohr 2 und zwei identische, voneinander beabstandete Innenrohre 3, die von der Dämmung 6 umgeben sind. In Übereinstimmung mit dem ersten Ausführungsbeispiel umfasst das Schutzrohr 10 die beiden Ausnehmungen 7, 8 zwischen der Dämmung 6 und dem Außenrohr 2. In beiden Ausnehmungen 7, 8 befindet sich jeweils ein Elektroinstallationsrohr 9.

Eine gedachte Verbindungslinie zwischen den beiden Innenrohren 3 verläuft senkrecht zu einer gedachten Verbindungslinie zwischen den Ausnehmungen 7, 8. Ein erstes Innenrohr 3 ist als Vorlaufleitung und das andere Innenrohr 3 ist als Rücklaufleitung ausgebildet. Das Schutzrohr 10 ist für den Anschluss an eine Wärmepumpe vorgesehen. In den Innenrohren 3 kann eine Wärmeträgerflüssigkeit, z. B. Wasser, zirkulieren. Das Schutzrohr 10 ermöglicht eine einfache Installation elektrischer Leitungen in dem Elektroinstallationsrohr 9.

### Bezugszeichenliste

- 1: Schutzrohr
- 2: Außenrohr
- 3: Innenrohr
- 4: Muffe
- 5: freies Ende
- 6: Dämmung
- 7: Ausnehmung
- 8: Ausnehmung
- 9: Elektroinstallationsrohr
- 10: Schutzrohr

## Patentansprüche

1. Schutzrohr (1, 10), insbesondere zum Anschluss an eine Wärmepumpe, umfassend ein Außenrohr (2), wenigstens ein in dem Außenrohr (2) angeordnetes, von einer Flüssigkeit durchströmbares Innenrohr (3), sowie eine einen Freiraum zwischen dem Innenrohr (3) und dem Außenrohr (2) ausfüllende Dämmung (6), **dadurch gekennzeichnet, dass** zwischen der Dämmung (6) und dem Außenrohr (2) wenigstens eine Ausnehmung (7, 8) ausgebildet ist, in der ein Elektroinstallationsrohr (9) anordenbar oder angeordnet ist.

2. Schutzrohr nach Anspruch 1, wobei die Ausnehmung (7, 8) kreisförmig oder kreissegmentförmig ausgebildet ist.

3. Schutzrohr nach Anspruch 1 oder 2, wobei die Ausnehmung (7, 8) hinterschnitten ist.

4. Schutzrohr nach einem der vorangehenden Ansprüche, wobei wenigstens zwei außenseitige Ausnehmungen (7, 8) vorhanden sind, die in Umfangsrichtung des Außenrohrs (2) äquidistant angeordnet sind.

5. Schutzrohr nach einem der vorangehenden Ansprüche, wobei das Außenrohr (2) aus einem rostfreien Material besteht, insbesondere aus Edelstahl.

6. Schutzrohr nach einem der vorangehenden Ansprüche, wobei ein erstes Innenrohr (3) als Vorlaufleitung und ein zweites Innenrohr (3) als Rücklaufleitung ausgebildet ist.

7. Schutzrohr nach einem der vorangehenden Ansprüche, wobei das Innenrohr (3) ein Hochtemperaturrohr (HT-Rohr) ist.

8. Anordnung, umfassend ein Schutzrohr (1, 10) nach einem der Ansprüche 1 bis 7 und wenigstens ein Elektroinstallationsrohr (9), das in der oder einer außenseitigen Ausnehmung (7, 8) angeordnet ist.

9. Anordnung nach Anspruch 8, wobei die Größe und die Form der außenseitigen Ausnehmung (7, 8) und die Größe und die Form des Elektroinstallationsrohrs (9) so gewählt sind, dass das Elektroinstallationsrohr (9) in der außenseitigen Ausnehmung (7, 8) klemmend gehalten ist.

10. Anordnung nach Anspruch 8 oder 9, wobei das Elektroinstallationsrohr (9) ein Wellrohr oder ein starres Rohr ist.

## Geänderte Patentansprüche

### Geänderte Patentansprüche gemäss Regel 137(2) EPÜ.

1. Schutzrohr (1, 10), insbesondere zum Anschluss an eine Wärmepumpe, umfassend ein Außenrohr (2), wenigstens ein in dem Außenrohr (2) angeordnetes, von einer Flüssigkeit durchströmbares Innenrohr (3), sowie eine einen Freiraum zwischen dem Innenrohr (3) und dem Außenrohr (2) ausfüllende Dämmung (6), wobei zwischen der Dämmung (6) und dem Außenrohr (2) wenigstens zwei außenseitige Ausnehmungen (7, 8) ausgebildet sind, die in Umfangsrichtung des Außenrohrs (2) äquidistant angeordnet sind und in denen ein Elektroinstallationsrohr (9) anordenbar oder angeordnet ist,
**dadurch gekennzeichnet, dass**
die Ausnehmungen (7, 8) U-förmig ausgebildet sind, wobei sich an einen kreissegmentförmigen inneren Abschnitt zwei parallele, radial nach außen weisende Wände anschließen.

2. Schutzrohr nach Anspruch 1, wobei die Ausnehmungen (7, 8) zum Außenrohr (2) hin offen sind.

3. Schutzrohr nach Anspruch 1 oder 2, wobei die Ausnehmung (7, 8) hinterschnitten ist.

4. Schutzrohr nach einem der vorangehenden Ansprüche, wobei das Außenrohr (2) aus einem rostfreien Material besteht.

5. Schutzrohr nach Anspruch 4, wobei das Außenrohr (2) aus Edelstahl besteht.

6. Schutzrohr nach einem der vorangehenden Ansprüche, wobei ein erstes Innenrohr (3) als Vorlaufleitung und ein zweites Innenrohr (3) als Rücklaufleitung ausgebildet ist.

7. Schutzrohr nach einem der vorangehenden Ansprüche, wobei das Innenrohr (3) ein Hochtemperaturrohr (HT-Rohr) ist.

8. Anordnung, umfassend ein Schutzrohr (1, 10) nach einem der Ansprüche 1 bis 7 und wenigstens ein Elektroinstallationsrohr (9), das in der oder einer außenseitigen Ausnehmung (7, 8) angeordnet ist.

9. Anordnung nach Anspruch 8, wobei die Größe und die Form der außenseitigen Ausnehmung (7, 8) und die Größe und die Form des Elektroinstallationsrohrs (9) so gewählt sind, dass das Elektroinstallationsrohr (9) in der außenseitigen Ausnehmung (7, 8) klemmend gehalten ist.

10. Anordnung nach Anspruch 8 oder 9, wobei das Elektroinstallationsrohr (9) ein Wellrohr oder ein starres Rohr ist.
